# DEMANDE DE BREVET EUROPEEN

(11) **EP 4 425 525 A1**
(43) Date de publication de la demande: **04.09.2024**
(21) Numéro de dépôt: 24159539.6
(22) Date de dépôt: 26.02.2024
(51) Int. Cl.: H01H 50/54, H01H 1/20, H01H 9/54

(54) **CONTACTEUR ÉLECTRIQUE ADAPTÉ POUR LES CIRCUITS ÉLECTRIQUES DE FORTE PUISSANCE, AÉRONEF COMPORTANT UN CIRCUIT ÉLECTRIQUE INTÉGRANT AU MOINS UN TEL CONTACTEUR ÉLECTRIQUE**

(30) Priorité: 28.02.2023 FR 2301810
(71) Demandeur: AIRBUS OPERATIONS (S.A.S.), 31060 Toulouse (FR)
(72) Inventeur: LACOSTE, Jean-Marc, 31060 TOULOUSE (FR); DUFLOS DE SAINT AMAND, Vincent, 31060 TOULOUSE (FR); CALDERON MENDOZA, Edwin, 31060 TOULOUSE (FR)
(74) Mandataire: Fantin, Laurent

(57) **Abrégé**

L'invention a pour objet un contacteur électrique (22) comportant au moins un couple de contacts (24.1, 26.1) écartés l'un de l'autre lorsque le contacteur électrique (22) est à l'état ouvert et en contact l'un avec l'autre lorsque le contacteur électrique (22) est à l'état fermé, ainsi qu'au moins un système d'extinction des arcs électriques (40) qui comporte au moins un interrupteur (42) reliant les contacts (24.1, 26.1) d'un même couple de contacts et configuré pour occuper un état passant dans lequel l'interrupteur (42) autorise un courant électrique à passer entre les contacts (24.1, 26.1) du couple de contacts dans au moins un sens et un état non passant dans lequel l'interrupteur (42) interdit à un courant électrique de passer entre les contacts (24.1, 26.1) du couple de contacts, ainsi qu'une commande (44) configurée pour contrôler l'état de l'interrupteur (42).

L'invention a également pour objet un aéronef comportant au moins un tel contacteur électrique.

## Description

La présente demande se rapporte à un contacteur électrique adapté pour les circuits électriques de forte puissance ainsi qu'à un aéronef comportant un circuit électrique intégrant au moins un tel contacteur électrique.

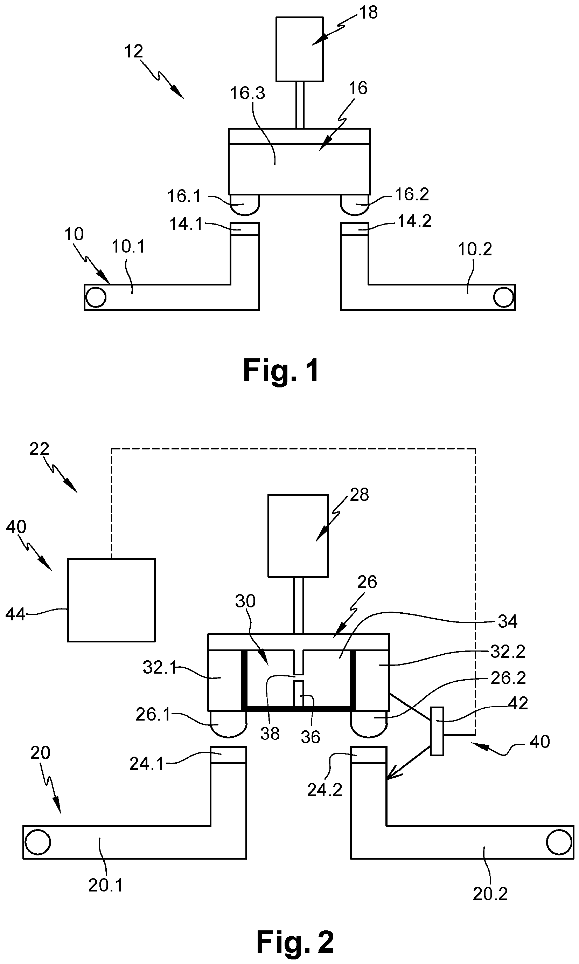

Selon un mode de réalisation visible sur la figure 1, un circuit électrique 10 comprend un contacteur électrique 12, reliant des première et deuxième parties 10.1, 10.2 du circuit électrique 10, configuré pour occuper un état ouvert dans lequel le contacteur électrique 12 ne permet pas à un courant électrique de circuler entre les première et deuxième parties 10.1, 10.2 ainsi qu'un état fermé dans lequel le contacteur électrique 12 permet à un courant électrique de circuler entre les première et deuxième parties 10.1, 10.2.

Le contacteur électrique 12 comprend :
- des premier et deuxième contacts fixes 14.1, 14.2 respectivement reliés aux première et deuxième parties 10.1, 10.2 du circuit électrique 10,
- une partie mobile 16 supportant des premier et deuxième contacts mobiles 16.1, 16.2, la partie mobile 16 étant configurée pour occuper une première position, correspondant à l'état ouvert du contacteur électrique 12, dans laquelle les premier et deuxième contacts mobiles 16.1, 16.2 sont respectivement écartés des premier et deuxième contacts fixes 14.1, 14.2 ainsi qu'une deuxième position, correspondant à l'état fermé du contacteur électrique 12, dans laquelle les premier et deuxième contacts mobiles 16.1, 16.2 sont respectivement en contact avec les premier et deuxième contacts fixes 14.1, 14.2,
- un actionneur 18 configuré pour déplacer la partie mobile 16 de la première position vers la deuxième position et inversement.

La partie mobile 16 comprend un corps en cuivre 16.3 assurant la continuité électrique entre les premier et deuxième contacts mobiles 16.1, 16.2.

Selon un mode de réalisation, l'actionneur 18 est un actionneur électromagnétique qui comprend une bobine, un plongeur coopérant avec la bobine ainsi qu'un ressort, la bobine étant configurée pour occuper un état excité à réception d'un signal dans lequel la bobine provoque un déplacement du plongeur dans un premier sens ainsi qu'un deuxième état non excité dans lequel le ressort provoque un déplacement du plongeur dans un deuxième sens opposé au premier sens. Selon un agencement, le premier sens de déplacement provoque la fermeture du contacteur électrique 12.

Ce mode de réalisation est adapté pour les circuits électriques de faible et moyenne puissances, fonctionnant par exemple avec un courant de 230V et une intensité de 100A.

Dans le cas d'un circuit électrique de forte puissance, fonctionnant avec un courant supérieur ou égal à 1200 V et une intensité supérieure ou égale à 500A, le contacteur électrique tel que décrit précédemment génère beaucoup d'éjections de matière, ce qui réduit significativement sa durée de vie. Par ailleurs, pour pouvoir fonctionner à ces niveaux de puissance, un actionneur conçu selon l'art antérieur doit présenter des dimensions importantes, ce qui conduit à augmenter sa masse et son encombrement. Le fait qu'un tel contacteur soit installé dans une zone non pressurisée d'un aéronef volant à haute altitude accentue ces problèmes. La présente invention vise à remédier à tout ou partie des inconvénients de l'art antérieur.

A cet effet, l'invention a pour objet un contacteur électrique comportant au moins un couple de contacts configurés pour occuper une première position, correspondant à un état ouvert du contacteur électrique, dans laquelle les contacts sont écartés ainsi qu'une deuxième position, correspondant à un état fermé du contacteur électrique, dans laquelle les contacts sont en contact l'un avec l'autre.

Selon l'invention, le contacteur électrique comprend au moins un système d'extinction des arcs électriques comportant au moins un interrupteur reliant les contacts d'un même couple de contacts et configuré pour occuper un état passant dans lequel l'interrupteur autorise un courant électrique à passer entre les contacts du couple de contacts dans au moins un sens et un état non passant dans lequel l'interrupteur interdit à un courant électrique de passer entre les contacts du couple de contacts, ainsi qu'une commande configurée pour contrôler l'état de l'interrupteur. En complément, le contacteur électrique comprend une paire de premier et deuxième contacts fixes ainsi qu'au moins une partie mobile supportant au moins une paire de premier et deuxième contacts mobiles, la partie mobile comprenant au moins un limiteur de courant reliant les premier et deuxième contacts mobiles.

Cette solution permet de limiter l'apparition d'arcs électriques et l'éjection de matière lorsque le contacteur électrique est utilisé dans un circuit électrique de forte puissance, ce qui contribue à réduire l'impact des arcs électriques et des éjections de matière sur la durée de vie du contacteur électrique.

Selon une autre caractéristique, la commande est configurée pour maintenir l'interrupteur à l'état non passant en l'absence d'arcs électriques entre les contacts reliés par l'interrupteur et le commuter à l'état passant en présence d'arcs électriques.

Selon une autre caractéristique, la commande est configurée pour provoquer un passage de l'interrupteur de l'état non passant à l'état passant lorsque le contacteur électrique passe de l'état fermé à l'état ouvert.

Selon une autre caractéristique, l'interrupteur et/ou la commande sont configurés pour maintenir l'interrupteur à l'état passant pendant une durée donnée à compter du passage de l'interrupteur à l'état passant.

Selon une autre caractéristique, le contacteur électrique comprend une paire de premier et deuxième contacts fixes ainsi qu'au moins une partie mobile supportant au moins une paire de premier et deuxième contacts mobiles, les premiers contacts fixe et mobile formant un premier couple de contacts, les deuxièmes contacts fixe et mobile formant un deuxième couple de contacts. En complément, l'interrupteur est unidirectionnel et permet, à l'état passant, à un courant électrique de passer du contact mobile vers le contact fixe d'un couple de contacts.

Selon une autre caractéristique, le système d'extinction des arcs électriques comprend un unique interrupteur reliant un couple de contacts fixe et mobile parmi un premier couple de contacts formé par les premiers contacts fixe et mobile et un deuxième couple de contacts formé par les deuxièmes contacts fixe et mobile.

Selon une autre caractéristique, l'interrupteur est un relais électronique.

Selon une autre caractéristique, chaque limiteur de courant est un limiteur de courant à métal liquide.

Selon une autre caractéristique, le limiteur de courant comprend des première et deuxième plaques en matériau conducteur solide reliées respectivement aux premier et deuxième contacts mobiles, une cavité séparant les première et deuxième plaques et contenant un matériau conducteur liquide, ainsi qu'au moins une cloison en matériau isolant électrique séparant la cavité en des première et deuxième chambres ; la cloison comportant au moins un orifice de passage permettant de faire communiquer les première et deuxième chambres ainsi qu'une section de passage dimensionnée de manière à écrêter un courant de court-circuit à une valeur maximale donnée.

L'invention a également pour objet un aéronef comprenant au moins un circuit électrique comportant au moins un contacteur électrique selon l'une des caractéristiques précédentes. D'autres caractéristiques et avantages ressortiront de la description de l'invention qui va suivre, description donnée à titre d'exemple uniquement, en regard des dessins annexés parmi lesquels :
- La figure 1 est une représentation schématique d'un contacteur électrique illustrant un mode de réalisation de l'art antérieur,
- La figure 2 est une représentation schématique d'un contacteur électrique illustrant un mode de réalisation de l'invention,
- La figure 3 montre différentes représentations schématiques du contacteur électrique visible sur la figure 2 à différents instants lors de son ouverture.

Selon un mode de réalisation visible sur la figure 2, un circuit électrique 20 comprend des première et deuxième parties 20.1, 20.2 reliées par un contacteur électrique 22.

Selon une application, un aéronef comprend un tel circuit électrique 20, le contacteur électrique 22 pouvant être situé dans un environnement non pressurisé.

Le contacteur électrique 22 comprend :
- au moins une paire de premier et deuxième contacts fixes 24.1, 24.2 respectivement reliés aux première et deuxième parties 20.1, 20.2 du circuit électrique 20,
- au moins une partie mobile 26 supportant au moins une paire de premier et deuxième contacts mobiles 26.1, 26.2, ladite partie mobile 26 étant configurée pour occuper une première position, correspondant à l'état ouvert du contacteur électrique 22, dans laquelle les premier et deuxième contacts mobiles 26.1, 26.2 sont respectivement écartés des premier et deuxième contacts fixes 24.1, 24.2 ainsi qu'une deuxième position, correspondant à l'état fermé du contacteur électrique 22, dans laquelle les premier et deuxième contacts mobiles 26.1, 26.2 sont respectivement en contact avec les premier et deuxième contacts fixes 24.1, 24.2,
- au moins un actionneur 28 configuré pour déplacer la partie mobile 26 de la première position vers la deuxième position et inversement.

Selon un mode de réalisation, l'actionneur 28 est un actionneur électromagnétique. Bien entendu, l'invention n'est pas limitée à ce mode de réalisation pour l'actionneur 28.

Selon une caractéristique de l'invention, la partie mobile 26 comprend au moins un limiteur de courant 30 reliant les premier et deuxième contacts mobiles 26.1, 26.2. Selon une configuration, la partie mobile 26 comprend un limiteur de courant 30 pour chaque paire de premier et deuxième contacts mobiles 26.1, 26.2.

Selon un mode de réalisation, chaque limiteur de courant 30 est un limiteur de courant à métal liquide. Selon un agencement, le limiteur de courant 30 comprend des première et deuxième plaques 32.1, 32.2 en matériau conducteur solide reliées respectivement aux premier et deuxième contacts mobiles 26.1, 26.2, sensiblement parallèles et espacées entre elles, une cavité 34 délimitée en partie par les première et deuxième plaques 32.1, 32.2 contenant un matériau conducteur liquide, ainsi qu'au moins une cloison 36 en matériau isolant électrique séparant la cavité 34 en des première et deuxième chambres. Selon un agencement, la cloison 36 est sensiblement parallèle aux première et deuxième plaques 32.1, 32.2 et positionnée sensiblement à équidistance des première et deuxième plaques 32.1, 32.2.

Les première et deuxième plaques 32.1, 32.2 comprennent chacune une zone de contact avec le matériau conducteur liquide présentant une surface donnée.

La cloison 36 comprend au moins un orifice de passage 38 qui permet de faire communiquer les première et deuxième chambres présentant une section de passage nettement inférieure à la surface donnée des première et deuxième plaques 32.1, 32.2 en contact avec le matériau conducteur liquide.

Selon une configuration, la cloison 36 peut comprendre plusieurs orifices de passage 38. Selon cette configuration, la somme des sections de passage des orifices de passage 38 est nettement inférieure à la surface donnée des première et deuxième plaques 32.1, 32.2 en contact avec le matériau conducteur liquide.

Par nettement inférieure, on entend que la section de passage de l'orifice de passage (ou des orifices de passage) est inférieure à au moins 10 fois la surface donnée des première et deuxième plaques 32.1, 32.2 en contact avec le matériau conducteur liquide.

Quelle que soit la configuration, la section de passage de la cloison 36, correspondant à la somme des sections de passage des orifices de passage 38, est dimensionnée de manière à permettre à un courant présentant une valeur inférieure à une valeur maximale donnée de traverser la cloison 36 via l'orifice (ou les orifices) de passage 38 et à écrêter un courant de court-circuit à la valeur maximale donnée.

A titre d'exemple, le matériau conducteur liquide est un métal eutectique commercialisé sous la dénomination Galinstan.

Bien entendu, l'invention n'est pas limitée à ce limiteur de courant 30.

Selon une autre caractéristique, le contacteur électrique 22 comprend au moins un système d'extinction des arcs électriques 40 qui comporte au moins un interrupteur 42 reliant un couple de contacts parmi un premier couple de contacts formé par les premiers contacts fixe et mobile 24.1, 26.1 et un deuxième couple de contacts, formé par les deuxièmes contacts fixe et mobile 24.2, 26.2, configuré pour occuper un état passant dans lequel l'interrupteur 42 autorise un courant électrique à passer entre les contacts fixe et mobile 24.1, 26.1 ; 24.2, 26.2 du couple de contacts dans au moins un sens et un état non passant dans lequel l'interrupteur 42 interdit à un courant électrique de passer entre les contacts fixe et mobile 24.1, 26.1 ; 24.2, 26.2 du couple de contacts, ainsi qu'une commande 44 configurée pour contrôler l'état de l'interrupteur 42.

Selon un mode de fonctionnement, l'interrupteur 42 est à l'état non passant lorsque le contacteur électrique 22 est à l'état fermé et n'est commuté à l'état passant qu'au moment de l'ouverture du contact électrique 22.

La commande 44 est configurée pour maintenir l'interrupteur 42 à l'état non passant en l'absence d'arcs électriques entre les contacts fixe et mobile 24.1, 26.1 (ou 24.2, 26.2) reliés par l'interrupteur 42 et le commuter à l'état passant en présence d'arcs électriques.

Selon une première configuration, le système d'extinction des arcs électriques 40 comprend un capteur configuré pour détecter un arc électrique entre les contacts fixe et mobile 24.1, 26.1 (ou 24.2, 26.2) reliés par l'interrupteur 42 et transmettre un signal à la commande 44 lorsqu'un arc électrique apparaît.

Selon un paramétrage, l'interrupteur 42 et/ou la commande 44 sont configurés pour maintenir l'interrupteur 42 à l'état passant pendant une durée donnée à compter du passage de l'interrupteur 42 à l'état passant.

Selon une deuxième configuration, la commande 44 est configuré pour provoquer un passage de l'état non passant à l'état passant de l'interrupteur 42 lorsque le contacteur électrique 22 passe de l'état fermé à l'état ouvert et reste à l'état passant pendant une durée donnée à compter de son passage à l'état passant.

Selon un mode de réalisation, l'interrupteur 42 est un relais électronique.

Selon un agencement, l'interrupteur 42 est unidirectionnel et permet à l'état passant le passage d'un courant électrique du contact mobile 26.1, 26.2 vers le contact fixe 24.1, 24.2 d'un couple de contacts.

Selon un mode de réalisation, le système d'extinction des arcs électriques 40 comprend un unique interrupteur 42 reliant un unique couple de contacts fixe et mobile 24.1, 26.1 ; 24.2, 26.2. Cette solution permet de garantir une isolation galvanique entre les première et deuxième parties 20.1, 20.2 du circuit électrique dans la mesure où seul un couple de contacts fixe et mobile est relié par l'interrupteur 42.

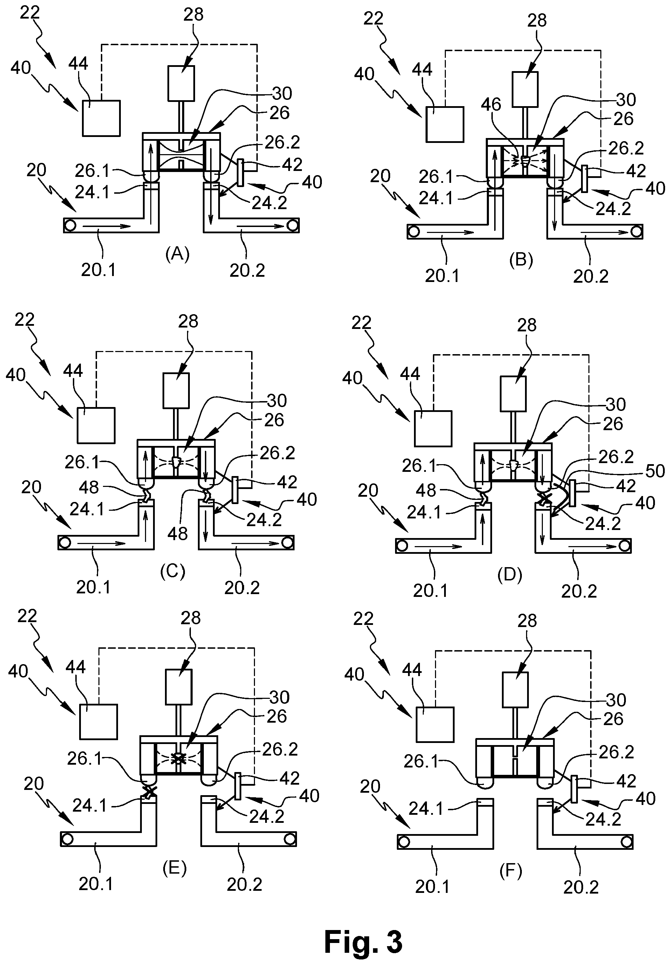

Le mode de fonctionnement du contacteur électrique 22 est décrit au regard de la figure 3.

A l'état fermé, comme illustré sur la partie (A) de la figure 3, les premier et deuxième contacts fixes 24.1, 24.2 sont en contact avec les premier et deuxième contacts mobiles 26.1, 26.2. Le limiteur de courant 30 n'interfère pas avec le courant passant par la partie mobile 26. L'interrupteur 42 est à l'état non passant.

En présence d'un courant de court-circuit 46, comme illustré sur la partie (B) de la figure 3, le limiteur de courant 30 écrête le courant de court-circuit à la valeur maximale donnée de sorte que si le courant de court-circuit 46 se propage de la première partie 20.1 à la deuxième partie 202.2 du circuit électrique 20, la deuxième partie 20.2 soit protégée du courant de court-circuit 46 par le limiteur de courant 30. L'interrupteur 42 est à l'état non passant.

A l'ouverture du contacteur électrique 20, comme illustré sur la partie (C) de la figure 3, des arcs électriques 48 apparaissent entre les contacts fixe et mobile 24.1, 26.1 ; 24.2, 26.2 de chaque couple de contacts et un courant de court-circuit apparaît entre les premier et deuxième contacts mobiles 26.1, 26.2. Comme précédemment, le limiteur de courant 30 limite le passage du courant entre les premier et deuxième contacts mobiles 26.1, 26.2.

Comme illustré sur la partie (D) de la figure 3, la commande 44 provoque le passage de l'interrupteur 42 de l'état non passant à l'état passant. Dans cet état, l'interrupteur 42 génère un chemin électrique 50 reliant les contacts fixe et mobile 24.1, 26.1 ; 24.2, 26.2 qui provoque l'extinction des arcs électriques 48 entre lesdits contacts fixe et mobile 24.2, 26.2 reliés par l'interrupteur 42.

Comme illustré sur la partie (E) de la figure 3, le fait d'éteindre les arcs électriques au niveau d'un premier couple de contacts fixe et mobile 24.2, 26.2 provoque automatiquement l'extinction des arcs électriques 48 entre les contacts fixe et mobile 24.1, 26.1 de l'autre couple de contacts.

Comme illustré sur la partie (F) de la figure 3, le contacteur électrique 22 est à l'état ouvert et l'interrupteur 42 est de nouveau à l'état non passant.

La présence du système d'extinction d'arcs électriques 40 permet de limiter l'apparition d'arcs électriques et l'éjection de matière, et de réduire ainsi l'impact de ces arcs électriques sur la durée de vie du contacteur électrique 22 même si le contacteur électrique est positionné dans une zone non pressurisée d'un aéronef.

En raison de la réduction des éjections de matière à l'ouverture du contacteur électrique, il n'est pas nécessaire de le surdimensionner, ce qui permet de conserver un volume et une masse limités.

Bien entendu, l'invention n'est pas limitée à ce mode de réalisation. Selon un autre mode de réalisation, le contacteur électrique comprend un unique couple de contacts fixe et mobile configurés pour occuper une première position, correspondant à l'état ouvert du contacteur électrique 22, dans laquelle les contacts fixe et mobile 24.1, 26.1 sont écartés ainsi qu'une deuxième position, correspondant à l'état fermé du contacteur électrique 22, dans laquelle les contacts fixe et mobile 24.1, 26.1 sont en contact l'un avec l'autre. Selon ce mode de réalisation, la partie mobile 26 supporte un seul contact mobile 26.1.

## Revendications

1. Contacteur électrique comportant au moins un couple de contacts (24.1, 26.1) configurés pour occuper une première position, correspondant à un état ouvert du contacteur électrique (22), dans laquelle les contacts (24.1, 26.1) sont écartés ainsi qu'une deuxième position, correspondant à un état fermé du contacteur électrique (22), dans laquelle les contacts (24.1, 26.1) sont en contact l'un avec l'autre ; **caractérisé en ce que** le contacteur électrique comprend au moins un système d'extinction des arcs électriques (40) qui comporte au moins un interrupteur (42) reliant les contacts (24.1, 26.1) d'un même couple de contacts et configuré pour occuper un état passant dans lequel l'interrupteur (42) autorise un courant électrique à passer entre les contacts (24.1, 26.1) du couple de contacts dans au moins un sens et un état non passant dans lequel l'interrupteur (42) interdit à un courant électrique de passer entre les contacts (24.1, 26.1) du couple de contacts, ainsi qu'une commande (44) configurée pour contrôler l'état de l'interrupteur (42), **en ce que** le contacteur électrique (22) comprend une paire de premier et deuxième contacts fixes (24.1, 24.2) ainsi qu'au moins une partie mobile (26) supportant au moins une paire de premier et deuxième contacts mobiles (26.1, 26.2) et **en ce que** la partie mobile (26) comprend au moins un limiteur de courant (30) reliant les premier et deuxième contacts mobiles (26.1, 26.2).

2. Contacteur électrique selon la revendication précédente, **caractérisé en ce que** la commande (44) est configurée pour maintenir l'interrupteur (42) à l'état non passant en l'absence d'arcs électriques entre les contacts (24.1, 26.1 ; 24.2, 26.2) reliés par l'interrupteur (42) et le commuter à l'état passant en présence d'arcs électriques.

3. Contacteur électrique selon l'une des revendications précédentes, **caractérisé en ce que** la commande (44) est configurée pour provoquer un passage de l'interrupteur (42) de l'état non passant à l'état passant lorsque le contacteur électrique (22) passe de l'état fermé à l'état ouvert.

4. Contacteur électrique selon l'une des revendications précédentes, **caractérisé en ce que** l'interrupteur (42) et/ou la commande (44) sont configurés pour maintenir l'interrupteur (42) à l'état passant pendant une durée donnée à compter du passage de l'interrupteur (42) à l'état passant.

5. Contacteur électrique selon l'une des revendications précédentes, **caractérisé en ce que** le contacteur électrique (22) comprend une paire de premier et deuxième contacts fixes (24.1, 24.2) ainsi qu'au moins une partie mobile (26) supportant au moins une paire de premier et deuxième contacts mobiles (26.1, 26.2), les premiers contacts fixe et mobile (24.1, 26.1) formant un premier couple de contacts, les deuxièmes contacts fixe et mobile (24.2, 26.2) formant un deuxième couple de contacts, et **en ce que** l'interrupteur (42) est unidirectionnel et permet, à l'état passant, à un courant électrique de passer du contact mobile (26.1, 26.2) vers le contact fixe (24.1, 24.2) d'un couple de contacts.

6. Contacteur électrique selon l'une des revendications précédentes, **caractérisé en ce que** le contacteur électrique (22) comprend une paire de premier et deuxième contacts fixes (24.1, 24.2) ainsi qu'au moins une partie mobile (26) supportant au moins une paire de premier et deuxième contacts mobiles (26.1, 26.2) et **en ce que** le système d'extinction des arcs électriques (40) comprend un unique interrupteur (42) reliant un couple de contacts fixe et mobile (24.1, 26.1 ; 24.2, 26.2) parmi un premier couple de contacts formé par les premiers contacts fixe et mobile (24.1, 26.1) et un deuxième couple de contacts formé par les deuxièmes contacts fixe et mobile (24.2, 26.2).

7. Contacteur électrique selon l'une des revendications précédentes, **caractérisé en ce que** l'interrupteur (42) est un relais électronique.

8. Contacteur électrique selon l'une des revendications précédentes, **caractérisé en ce que** chaque limiteur de courant (30) est un limiteur de courant à métal liquide.

9. Contacteur électrique selon la revendication précédente, **caractérisé en ce que** le limiteur de courant (30) comprend des première et deuxième plaques (32.1, 32.2) en matériau conducteur solide reliées respectivement aux premier et deuxième contacts mobiles (26.1, 26.2), une cavité (34) séparant les première et deuxième plaques (32.1, 32.2) et contenant un matériau conducteur liquide, ainsi qu'au moins une cloison (36) en matériau isolant électrique séparant la cavité (34) en des première et deuxième chambres, la cloison (36) comportant au moins un orifice de passage (38) permettant de faire communiquer les première et deuxième chambres ainsi qu'une section de passage dimensionnée de manière à écrêter un courant de court-circuit à une valeur maximale donnée.

10. Aéronef comprenant au moins un circuit électrique comportant au moins un contacteur électrique selon l'une des revendications précédentes.
